(19) Europäisches Patentamt
European Patent Office
Office européen des brevets

(11) **EP 2 999 976 B1**

(12) **EUROPÄISCHE PATENTSCHRIFT**

(45) Veröffentlichungstag und Bekanntmachung des Hinweises auf die Patenterteilung:
**06.12.2017 Patentblatt 2017/49**

(21) Anmeldenummer: **14729578.6**

(22) Anmeldetag: **14.05.2014**

(51) Int Cl.:
***G01S 13/58*** (2006.01)   ***G01S 13/34*** (2006.01)
*G01S 7/35* (2006.01)

(86) Internationale Anmeldenummer:
**PCT/DE2014/000249**

(87) Internationale Veröffentlichungsnummer:
**WO 2014/187443 (27.11.2014 Gazette 2014/48)**

(54) **VERFAHREN ZUR BESTIMMUNG VON ABSTAND UND RELATIVGESCHWINDIGKEIT EINES ENTFERNTEN OBJEKTS**

METHOD FOR DETERMINING THE DISTANCE AND RELATIVE SPEED OF A REMOTE OBJECT

PROCÉDÉ PERMETTANT DE DÉTERMINER L'ÉLOIGNEMENT ET LA VITESSE RELATIVE D'UN OBJET ÉLOIGNÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2013 DE 102013008607**

(43) Veröffentlichungstag der Anmeldung:
**30.03.2016 Patentblatt 2016/13**

(73) Patentinhaber: **S.M.S. Smart Microwave Sensors GmbH**
**38108 Braunschweig (DE)**

(72) Erfinder:
• **MENDE, Ralph**
**38106 Braunschweig (DE)**
• **KYRISCH, Fabian**
**38165 Lehre (DE)**

(74) Vertreter: **Lins, Martina**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
**EP-A1- 0 863 409     EP-A1- 1 635 188**
**EP-B1- 1 325 350**

• **MEINECKE M-M ET AL: "Combination of LFMCW and FSK Modulation Principles for Automotive Radar Systems", INTERNET CITATION, 11. Oktober 2000 (2000-10-11), XP002195247, Gefunden im Internet: URL:www.smartmicro.de/html/publications.html [gefunden am 2002-04-05]**

**Beschreibung**

Die Erfindung betrifft ein Verfahren zur Bestimmung von Abstand und Relativgeschwindigkeit wenigstens eines von einem Beobachtungspunkt entfernten Objekts mit folgenden Verfahrensschritten:

- kontinuierliches Aussenden von wenigstens einem ersten und einem zweiten elektromagnetischen Signals jeweils einer Signal-periode ($T_{Chirp}$) vom Beobachtungspunkt aus;

- die Signale bestehen aus Signalabschnitten (Bursts) mit konstanter Frequenz und einer vorgegebenen gleichen Dauer, wobei die Signalabschnitte eines Signals mit Frequenzschritten einen vorgegebenen Modulationsbereich überstreichen;

- die Signale werden dadurch ineinander verschachtelt ausgesandt, dass Signalabschnitte der verschiedenen Signale zeitlich aneinander anschließen, wobei zwischen den aneinander anschließenden Signalabschnitten unterschiedlicher Signale ein Frequenzsprung vorhanden ist,

- Empfangen der vom Objekt als Echosignal reflektierten Signale und Durchführung einer Mischoperation mit dem Sendesignal zur Transformation des empfangenen Signals in das Basisband in einem gemeinsamen analogen Kanal;

- Durchführung einer Analog-Digital-Wandlung und Abtasten der empfangenen Signalabschnitte der Echosignale und Entnahme wenigstens eines Abtastwerts für jeden Signalabschnitt;

- separates Auswerten der Abtastwerte für die verschiedenen Echosignale der verschiedenen ausgesandten Signale mittels einer Fourier-Transformationsstufe und Bestimmung der Frequenz der Signalabschnitte entsprechenden Peaks und Bestimmung einer Phasendifferenz zwischen den Echosignalen der ausgesandten Signale, wobei die Signalabschnitte des zweiten Signals (B) mit denselben Frequenzen ausgesandt werden wie entsprechende Signalabschnitte des ersten Signals (A), wobei aus der Bestimmung der Phasendifferenz zwischen Signalabschnitten der Signale (A, B), die mit derselben Sendefrequenz ausgesandt werden, eine eindeutige Relativgeschwindigkeit bestimmt wird.

Ein derartiges Verfahren wird insbesondere für die Erfassung von Verkehrsteilnehmern im Straßenverkehr verwendet. Dabei kann der Beobachtungspunkt ortsfest sein, wenn beispielsweise das Verkehrsaufkommen auf einer viel befahrenen Straße, einer Kreuzung oder sonstigen Verkehrsbrennpunkten erfasst werden soll. Ein weiteres Anwendungsgebiet für ein derartiges Verfahren besteht für Fahrerassistenzsysteme. Diese beruhen darauf, dass der Verkehr relativ zu einem ggf. bewegten Kraftfahrzeug erfasst und ausgewertet wird, sodass ggf. kritische Situationen erkannt werden können, die zur Auslösung eines Warnsignals führen oder ggf. in Notfällen in die Führung des Kraftfahrzeugs eingreifen. Bekannte Systeme dieser Art können den Abstand zum vorausfahrenden Fahrzeug regeln, eine Kollisionsgefahr beim Spurwechsel erkennen und ggf. bei einer Kollisionsgefahr mit einem Hindernis eine Notbremsung auslösen.

Für derartige Systeme ist es essentiell, dass mehrere Objekte sicher erkannt und diesen Objekten auch eine richtige Relativgeschwindigkeit zugeordnet werden kann.

Die vorliegende Erfindung befasst sich mit kontinuierlich ausgesandten elektromagnetischen Signalen, insbesondere Radarsignalen. Für die Verkehrsanwendungen sind insbesondere Frequenzbänder zwischen 76 und 77 GHz und zwischen 24 und 24,25 GHz von Bedeutung. Bei diesen hohen Frequenzen lassen sich aufgrund der kleinen Wellenlängen von 4 mm bzw. 12,5 mm Antennen mit sehr kleiner Baugröße realisieren, sodass der Raumbedarf für Radarsensoren klein ist und sich diese unauffällig an einem Fahrzeug anbringen lassen.

In sehr prinzipieller Weise kann mittels eines mit einer konstanten Frequenz ausgesandten Signals, das von einem bewegten Objekt reflektiert wird, die Relativgeschwindigkeit des bewegten Objektes festgestellt werden, indem die durch den Dopplereffekt hervorgerufene Frequenzverschiebung festgestellt wird. Um die Laufzeit des aus-gesandten, reflektierten und wieder empfangenen Signals ermitteln zu können, woraus sich eine Abstandsbestimmung ergibt, ist es bekannt, die Frequenz des ausgesandten Signals periodisch zu verändern, beispielsweise linear ansteigen oder linear abfallen zu lassen. Die Frequenzdifferenz zwischen den ausgesandten und wieder empfangenen Signalen enthält eine Information über den Abstand, allerdings in eindeutiger Weise nur dann, wenn das Objekt relativ zum Beobachtungspunkt unbewegt ist. Ansonsten entstehen aufgrund der Überlagerung der Abstandsmessung und des Dopplereffektes Mehrdeutigkeiten. Durch geeignete Ausbildung der ausgesandten Signale bzw. Signalperioden gelingt es, die Mehrdeutigkeiten zumindest teilweise zu beseitigen. So ist es beispielsweise bekannt, mehrere unterschiedliche Signalperioden ($T_{Chirp}$) auszusenden, um durch Auswertung der einzelnen Tchirp, aber auch der Gesamtsignale eindeutige Messwerte zu errechnen. Nachteilig hieran ist die durch die Verwendung mehrerer $T_{Chirp}$ vervielfältige Messzeit, die sowohl für Warnanwendungen als auch für Eingriffe in das Führen des Fahrzeugs in Notfallsituationen kritisch ist.

Zur Verkürzung der Messzeit ist es daher bekannt, mehrere ausgesandte Signale ineinander zu verschachteln, indem für beispielsweise zwei Signale Signalabschnitte gebildet und abwechselnd ein Signalabschnitt eines ersten Signals, ein Signalabschnitt eines zweiten Signals usw. ausgesandt wird. Die Anzahl der ineinander verschachtelten Signale ist dabei prinzipiell nicht begrenzt.

Bei dem Verfahren der eingangs erwähnten Art, das durch EP 1 325 350 B1 bekannt ist, werden Signalabschnitte mit konstanter Frequenz aus-gesandt. Die Signalabschnitte eines Signals überstreichen während einer Signalperiode ($T_{Chirp}$) einen vorgegebenen Modulationsbereich ($f_{Sweep}$) durch stufenförmiges Umspringen der Frequenzen der Signalabschnitte des betreffenden Signals. Durch die Verwendung konstanter Frequenzen innerhalb eines Signalabschnitts lassen sich schnelle und stabile Auswertungen vornehmen. Das Auswertungsprinzip beruht darauf, dass aufgrund der vorgenommenen Frequenzbestimmung und der Phasenbestimmung jeweils eine Mehrdeutigkeitsgerade im Entfernungs-Geschwindigkeits-Koordinatensystem existiert. Es ist jedoch ein Schnittpunkt der beiden Geraden ermittelbar, der die gewünschte Zuordnung des Ortes und der Relativgeschwindigkeit eines Objekts eindeutig ermöglicht. Für eine fehlerfreie Auswertung ist es sinnvoll, die beiden Mehrdeutigkeits-geraden so auszubilden, dass sie möglichst oder nahezu senkrecht aufeinander stehen. Die sich aus der Frequenzmessung ergebende Gerade lässt sich in ihrer Steigung durch die Wahl des Modulationsbereichs ein-stellen, während für die Neigung der sich aus der Phasenbestimmung ergebenden Gerade die Frequenzverschiebung zwischen den beiden zueinander verschachtelt ausgesandten Signalen relevant ist. Die Frequenzdifferenz zwischen den Signalabschnitten der beiden miteinander verwobenen Signale stellt somit einen Parameter dar, mit dem das Signal-Rausch-Verhältnis für die Auswertung beeinflussbar ist.

Das bekannte Verfahren hat sich in der Praxis bewährt. Für schwierige Überwachungssituationen ist es allerdings erforderlich, drei oder vier verschiedene Signale miteinander zu verschachteln, um bezüglich der Entfernung eindeutige Messergebnisse zu erzielen. Der Auswertungs-aufwand ist daher erheblich und erfordert nicht nur leistungsfähige Algorithmen sondern auch schnelle Rechnerleistungen. Darüber hinaus ist für die Auswertung komplizierterer Situationen auch ein erheblicher Aufwand im Senderteil der Anordnungen für die Durchführung des Verfahrens erforderlich.

Das beschriebene Verfahren ist Grundlage für die Offenbarung in EP 1 635 188 A1. Darin wird vorgeschlagen, als Sendesignale zwei zeitlich zueinander verschobene identische Sendesignale zu verwenden, zwischen denen hin- und hergeschaltet wird. Auf einer ansteigenden Rampe können somit aneinander anschließende Signalabschnitte ausgesandt werden. In einer beschriebenen Ausführungsform kann die ausgesandte Frequenz während des Aussendeintervalls konstant gehalten werden. Als wesentlich wird für die Auswertung angesehen, dass die beiden als Modulationsfrequenzen bezeichneten Signale eine gleiche Steigung aufweisen. Aufgrund der konstant gehaltenen Frequenz kann ein Signal gebildet werden, bei dem sich die ausgesandte Frequenz nach einigen Perioden identisch wiederholt. Eine Auswirkung dieses Signals auf die Auswertungsroutine, die im Wesentlichen der Auswertungsroutine gemäß EP 1 325 350 B1 entspricht, ist dabei nicht beschrieben.

Der vorliegenden Erfindung liegt die Aufgabe zugrunde, das bekannte Verfahren so auszugestalten, dass eine vereinfachte Auswertung ohne wesentliche Verlängerung der Messzeit auch für komplizierte Situationen möglich ist.

Zur Lösung dieser Aufgabe ist das eingangs erwähnte Verfahren, dadurch gekennzeichnet, dass zunächst die Relativgeschwindigkeit als unabhängig von der Entfernung des Objekts bestimmt und in die an sich mehrdeutige Frequenzmessung eingegeben wird, sodass aus der Frequenzmessung die Entfernungsbestimmung zu den festgestellten Geschwindigkeiten eindeutig möglich ist.

Das erfindungsgemäße Verfahren beruht somit auf einer Frequenzdifferenz zwischen den Signalabschnitten des ersten Signals und des zweiten Signals von Null. Im einfachsten Fall stellt sich das zweite Signal als gegenüber dem ersten Signal lediglich zeitlich verschoben dar und kann im Übrigen identisch aufgebaut sein.

Das erfindungsgemäße Verfahren beruht auf der Erkenntnis, dass mit der Frequenzdifferenz Null zwischen Signalabschnitten des ersten Signals und des zweiten Signals die Mehrdeutigkeitsgeraden im Entfernungs-Geschwindigkeits-Koordinatensystem parallel zur Entfernungskoordinate verläuft und somit nicht vom Ort abhängt. Demgemäß kann bei der Phasenmessung unmittelbar und eindeutig die Relativgeschwindigkeit bestimmt werden, weil keine Abhängigkeit des Messergebnisses von der Entfernung des Objekts von dem Beobachtungspunkt vorliegt. Auf diese Weise kann die Geschwindigkeit ermittelt und in die an sich mehrdeutige Frequenzmessung eingegeben werden, sodass aus der Frequenzmessung die Entfernungsbestimmung zu den festgestellten Geschwindigkeitswerten eindeutig möglich ist.

Es ist durch die Erfindung nicht ausgeschlossen, bei der Signal-verschachtelung auch ein drittes Signal zu verwenden. Es hat sich jedoch gezeigt, dass selbst für komplizierte Situationen die Verwendung zweier miteinander verschachtelter Signale regelmäßig ausreichend ist.

Die Auswertung erfolgt dabei vorzugsweise in an sich bekannter Weise durch eine Quadraturdemodulation der empfangenen Signale, also eine Trennung von Imaginär- und Realanteil. Die auf diese Weise ins Basisband umgesetzten Signale werden digitalisiert und signalweise getrennt separat einer Fast-Fourier-Transformation unterzogen. In üblicher Weise werden dann nach der Schwellwertmethode Peaks im Frequenzbereich ermittelt, die somit bestimmten Frequenzen zugeordnet sind. Die Frequenz wird für jedes Signal ermittelt. Im Anschluss daran wird die Phase der jeweiligen Frequenz ermittelt und die Phasendifferenz der beiden empfangenen Signale gebildet. Die Frequenz enthält als Parameter die Relativgeschwindigkeit und den Abstand. Da durch die Phasendifferenzbestimmung die Geschwindigkeit bereits ermittelbar ist, kann in einfacher Weise der zugehörige Abstand berechnet werden.

Es ergibt sich, dass die zeitliche Verschiebung der beiden Signale bezüglich der gleich frequenten Signalabschnitte vorzugsweise wenigstens die Länge dreier Signalabschnitte aufweisen sollte. Eine geringere zeitliche Verschiebung führt zu einer zu geringen Aussagekraft der Phasenmessung für die zu ermittelnde Geschwindigkeit, da die Steigung der gemessenen Phase in Abhängigkeit von der Geschwindigkeit zu gering wird und daher ein zu geringes Signal-Rausch-Verhältnis mit sich bringt. Der Abstand von drei oder fünf Burst-Breiten führt zu erheblich größeren Steigungen der Messgerade und daher zu einer wesentlich verbesserten Ermittlung der Geschwindigkeit. Eine noch größere zeitliche Verschiebung des zweiten Signals gegenüber dem ersten Signal kann die Empfindlichkeit der Geschwindigkeitsbestimmung noch steigern, führt aber dann zu einer merkbaren Verlängerung der Messzeit und damit der Ansprechgeschwindigkeit.

Die Erfindung soll im Folgenden anhand von in der Zeichnung dargestellten Ausführungsbeispielen näher erläutert werden. Es zeigen:

Figur 1    eine schematische Darstellung zweier ineinander verschachtelt ausgesandter Signale;

Figur 2    eine Darstellung der Mehrdeutigkeitsgeraden im RV-Diagramm;

Figur 3    eine Darstellung gemäß Figur 1 für eine im Rahmen der Erfindung liegende Variante des zweiten Signals.

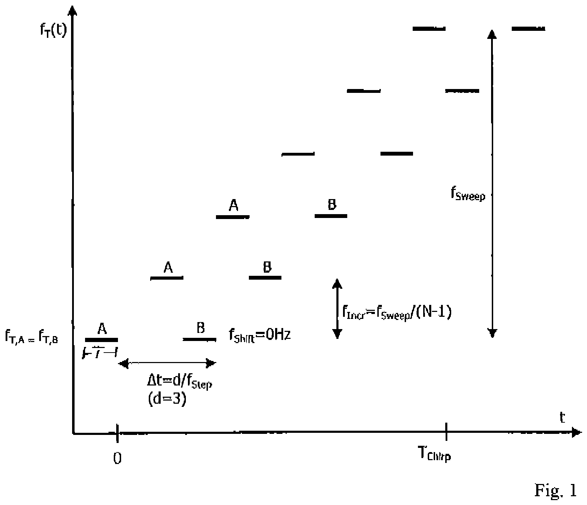

Figur 1 zeigt ein erstes Signal A und ein zweites Signal B, die ineinander verschachtelt ausgesandt werden. Das erste Signal A besteht aus mehreren Signalabschnitten, die über eine Dauer T ausgesandt werden. Die Dauer T entspricht einer Frequenz $f_{Step}$ über $T=1/f_{Step}$. Zwischen den Signalabschnitten des Signals A ist eine gleichlange Pause vorgesehen, in der Signalabschnitte des Signals B ausgesandt werden können. In dem dargestellten Ausführungsbeispiel beginnt das zweite Signal B mit einer Zeitverzögerung von dT (= $d/f_{Step}$), wobei d hier = 3 beträgt, sodass zwischen den beiden ersten beiden Bursts des ersten Signals A kein Signalabschnitt des zweiten Signals ausgesandt wird. Für die Verschachtelung ohne Sendepause ist d ungerade und kann daher auch beispielsweise = 5 betragen.

In dem in Figur 1 dargestellten bevorzugten Ausführungsbeispiel beträgt der Frequenzschritt zwischen den Signalabschnitten des ersten Signals A und den Signalabschnitten des zweiten Signals B jeweils konstant $f_{Incr}$, sodass die Steigung der Signale A und B über den überstrichenen Frequenzbereich $f_{Sweep}$ parallel zueinander verlaufen. Die Frequenzdifferenz zwischen den ersten Signalabschnitt des ersten Signals A und des ersten Signalabschnitts des zweiten Signals B beträgt Null. Der durch die Frequenzschritte $f_{Incr}$ überstrichene Frequenzbereich ist $f_{Sweep}$. Die Dauer der Signalperiode ($T_{Chirp}$) beträgt $T_{Chirp}$. Die Parallelität der Signale A und B (und ggf. eines oder mehrerer weiterer Signale) erleichtert die Auswertung.

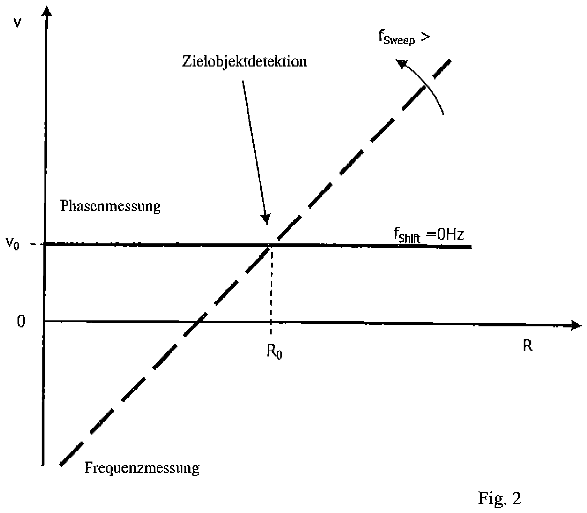

Figur 2 verdeutlicht die Mehrdeutigkeitsgeraden im Entfernungs-Geschwindigkeits-Koordinatensystem für die Phasenmessung und die Frequenzmessung. Die die Phasenmessung charakterisierende Gerade verläuft parallel zur R-Achse. Dies bedeutet, dass die Geschwindigkeit $V_0$ in der Phasenmessung unabhängig von dem Abstand $R_0$ des Objekts enthalten ist. Der Schnittpunkt der sich aus der Frequenzmessung ergebenden Geraden mit der Geraden für die Phasenmessung ermöglicht die Bestimmung des Abstands $R_0$.

Es ist somit erkennbar, dass die Phasendifferenz $\Delta\varphi$ die Basis für die Bestimmung der relativen Geschwindigkeit V bildet. Es gilt (für die Trägerfrequenz $f_c$ des Radarsignals, die derzeit 24 GHz oder 77 GHz beträgt):

$$v = \frac{c \cdot f_{Step} \cdot \Delta\varphi}{4 \cdot \pi \cdot d \cdot \left( f_c + \dfrac{f_{Sweep}}{2} \right)}$$

Die mögliche Ortsauflösung $\Delta$R ergibt sich zu

$$\Delta R = \frac{c}{2 \cdot f_{Sweep}}$$

$$k = \frac{v}{\Delta v} - \frac{R}{\Delta R} \quad \Leftrightarrow \quad \frac{v}{\Delta v} = \frac{R}{\Delta R} + k$$

Die Geschwindigkeitsauflösung $\Delta$v ergibt sich aus der CPI-Länge eines Signalabschnitts Tchirp. Jedes der beiden Signale wird mit seinen aus den Bursts gebildeten Signalsequenzen durch eine Fourier-Transformation und eine Schwellwertdetektion ausgewertet. Ein einzelnes Objekt mit einem bestimmten Abstand und einer bestimmten Geschwindigkeit wird in beiden Sequenzen bei demselben ganzzahligen index k=$k_A$=$k_B$ im Fourier-transformierten Ausgangssignal der beiden ausgewerteten Spektren detektiert. In beiden Signalsequenzen werden dieselben Abstands- und Geschwindigkeits-Mehrdeutigkeiten auftreten. Die gemessenen Phasen $\varphi$A und $\varphi$B der beiden komplexen Spektralpeaks unterscheiden sich und enthalten die differenzierende Geschwindigkeitsinformation, die zur Auflösung der Mehrdeutigkeit verwendet werden kann. Aufgrund der kohärenten Messtechnik in den beiden Sequenzen kann die

Phasendifferenz $\Delta\varphi=\varphi B - \varphi A$ für die Abstandsbestimmung und die Geschwindigkeitsbestimmung ausgewertet werden. Die Phasendifferenz $\Delta\varphi$ kann analytisch durch die folgende Gleichung beschrieben werden:

$$\Delta\varphi = \frac{\pi}{N-1} \cdot \frac{v}{\Delta v}$$

wobei N die Anzahl der Frequenzschritte in jeder Sendefrequenz A und B der beiden verschiedenen Frequenzen ist. Bei der ersten Berechnung kann $\Delta\varphi$ mehrdeutig sein, jedoch können die Mehrdeutigkeiten durch Kombination der Messergebnisse gemäß der obigen Gleichung aufgelöst werden. Der Schnittpunkt der beiden Messresultate führt zu einer eindeutigen Bestimmung des Abstands und der Relativgeschwindigkeit.

Unter Berücksichtigung der Phasendifferenz $\Delta\varphi$ werden eindeutige Messergebnisse erhalten zu:

$$R_0 = \frac{\Delta R}{\pi} \cdot \left( (N-1) \cdot \frac{\Delta\varphi}{d} - \pi \cdot k \right)$$

$$v_0 = \frac{(N-1) \cdot \Delta v}{\pi} \cdot \frac{\Delta\varphi}{d}$$

In Figur 2 entsprechen die Koordinaten $R_0$, $V_0$ dem Schnittpunkt der beiden Mehrdeutigkeitsgeraden.

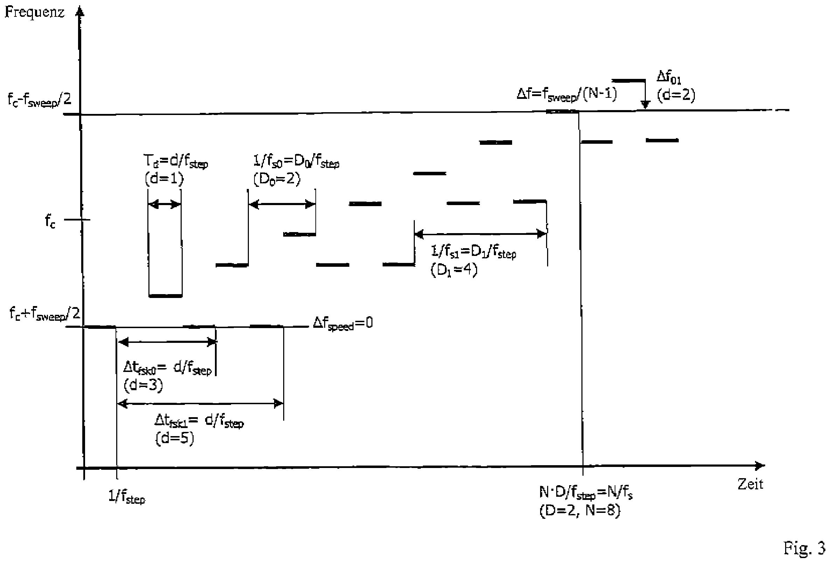

Figur 3 verdeutlicht, dass auch eine Modifikation im Rahmen der Erfindung möglich ist, in der das zweite Signal doppelt verschachtelt mit dem ersten Signal ausgesandt wird. Das zweite Signal wird mit jeweils zwei gleich frequenten Signalabschnitten in den Lücken zwischen dem zweiten und dem dritten Signalabschnitt und zwischen dem dritten und dem vierten Signalabschnitt des ersten Signals A ausgesandt. In entsprechender Weise finden sich mit dem dritten Signalabschnitt des ersten Signals A gleich frequente Signalabschnitte in den Lücken zwischen dem vierten und fünften und fünften und sechsten Signalabschnitt des ersten Signals A. Hieraus ergibt sich, dass der Frequenzsprung zwischen den gleich frequenten Signalabschnittspaaren des zweiten Signals B zwei $f_{Incr}$ des ersten Signals A entspricht.

Bei gleicher Messzeit lässt sich bei dieser Variante ein zusätzlicher Differenzphasenmesswert für die Geschwindigkeit pro aufgelöstem Peak gewinnen, sodass die Messgenauigkeit und der eindeutige Messbereich für die Relativgeschwindigkeit vergrößert wird.

Figur 3 lässt erkennen, dass eines oder mehrerer der Signale über den durch $f_{Sweep}$ vorgegebenen Bereich hinaus "verlängert" sein kann. Insbesondere kann dadurch erreicht werden, dass am Beginn des Bereichs $f_{Sweep}$ bestehende Modulationsloch bei d = 3 oder d = 5 aufgrund des Fehlens eines Signalabschnitts des zweiten Signals B nicht in die Auswertung einbezogen werden muss, da aufgrund der verlängerten Signale über das Ende des Bereichs $f_{Sweep}$ hinaus eine Auswertung über einen durch das Modulationsloch nicht gestörten Frequenzbereich möglich ist, der $f_{Sweep}$ entspricht.

Die Ausführungsbeispiele lassen erkennen, dass das erste und zweite Signal vorzugsweise mit derselben Frequenz für das Überstreichen des Modulationsbereichs beginnt.

**Patentansprüche**

1. Verfahren zur Bestimmung von Abstand (R) und Relativgeschwindigkeit (v) wenigstens eines von einem Beobachtungspunkt entfernten Objekts mit folgenden Verfahrensschritten:

     - kontinuierliches Aussenden von wenigstens einem ersten und einem zweiten elektromagnetischen Signals jeweils einer Signalperiode ($T_{Chirp}$) vom Beobachtungspunkt aus;
     - die Signale bestehen aus Signalabschnitten (Bursts) mit konstanter Frequenz und einer vorgegebenen gleichen Dauer, wobei die Signalabschnitte eines Signals mit Frequenzschritten einen vorgegebenen Modulationsbereich überstreichen;
     - die Signale werden dadurch ineinander verschachtelt ausgesandt, dass Signalabschnitte der verschiedenen Signale zeitlich aneinander anschließen, wobei zwischen den aneinander anschließenden Signalabschnitten unterschiedlicher Signale ein Frequenzsprung vorhanden ist,
     - Empfangen der vom Objekt als Echosignal reflektierten Signale und Durchführung einer Mischoperation mit dem Sendesignal zur Transformation des empfangenen Signals in das Basisband in einem gemeinsamen analogen Kanal;
     - Durchführung einer Analog-Digital-Wandlung und Abtasten der empfangenen Signalabschnitte der Echosignale und Entnahme wenigstens eines Abtastwerts für jeden Signalabschnitt;
     - separates Auswerten der Abtastwerte für die verschiedenen Echosignale der verschiedenen ausgesandten Signale mittels einer Fourier-Transformationsstufe und Bestimmung der Frequenz der Signalabschnitte entsprechenden Peaks und Bestimmung einer Phasendifferenz zwischen den Echosignalen der ausgesandten Signale, wobei die Signalabschnitte des zweiten Signals (B) mit denselben Frequenzen ausgesandt werden wie entsprechende Signalabschnitte des ersten Signals (A), wobei aus der Bestimmung der Phasendifferenz zwischen Signalabschnitten der Signale (A, B), die mit derselben Sendefrequenz ausgesandt werden, eine eindeutige Relativgeschwindigkeit bestimmt wird,

**dadurch gekennzeichnet, dass** zunächst die Relativgeschwindigkeit als unabhängig von der Entfernung des Objekts bestimmt und in die an sich mehrdeutige Frequenzmessung eingegeben wird, sodass aus der Frequenzmessung die Entfernungsbestimmung zu den festgestellten Geschwindigkeiten eindeutig möglich ist.

2. Verfahren nach Anspruch 1, **dadurch gekennzeichnet, dass** das erste und das zweite ausgesandte Signal identisch sind und zueinander zeitversetzt ausgesandt werden.

3. Verfahren nach Anspruch 1 oder 2, **dadurch gekennzeichnet, dass** der Zeitversatz der Länge von drei Signalabschnitten (3T) entspricht.

4. Verfahren nach Anspruch 1 oder 2, **dadurch gekennzeichnet, dass** der Zeitversatz der Länge von fünf Signalabschnitten (5T) entspricht.

5. Verfahren nach einem der Ansprüche 1 bis 4, **dadurch gekennzeichnet, dass** das zweite Signal (B) aus jedem zweiten Signalabschnitt des ersten Signals (A) gebildet wird, der in Form von zwei Signalabschnitten zweimal mit einem Signalabschnitt des ersten Signals (A) verschachtelt ausgesandt wird.

**Claims**

1. A method for determining the distance (R) and relative speed (v) of at least one object remote from an observation point, comprising the following method steps:

- continuously emitting at least a first and a second electromagnetic signal with a respective signal period ($T_{Chirp}$) from the observation point;
- the signals consisting of signal sections (bursts) of constant frequency and of a prescribed equal duration, the signal sections of a signal sweeping a prescribed modulation range with frequency steps;
- the signals being emitted in a fashion interleaved with one another by virtue of the fact that the signal sections of the various signals are mutually adjacent in time, a frequency hop being present between the mutually adjacent signal sections of different signals,
- receiving the signals reflected as echo signal from the object, and carrying out a mixing operation with the transmitted signal in order to transform the received signal into the baseband in a common analog channel;
- carrying out an analog-to-digital conversion and sampling the received signal sections of the echo signals and sampling at least one sample for each signal section;
- separately evaluating the samples for the various echo signals of the various emitted signals by means of a Fourier transformation stage, and determining the frequency of peaks corresponding to the signal sections and determining a phase difference between the echo signals of the emitted signals, the signal sections of the second signal (B) being emitted at the same frequencies as corresponding signal sections of the first signal (A), wherein a relative speed is directly and unambiguously determined by determining the phase difference between signal sections of the signals (A,B), which are emitted at the same frequency

**characterized in that** at first the relative speed is determined as being independent from the distance of the object and is input into the frequency measurement being ambiguous in itself so that it is possible to use the frequency measurement to determine the distance unambiguously in relation to the determined speeds.

2. The method as claimed in claim 1, **characterized in that** the first and the second emitted signals are identical and are emitted with a mutual time offset.

3. The method as claimed in claim 1 or 2, **characterized in that** the time offset corresponds to the length of three signal sections (3T).

4. The method as claimed in claim 1 or 2, **characterized in that** the time offset corresponds to the length of five signal sections (5T).

5. The method as claimed in one of claims 1 to 4, **characterized in that** the second signal (B) is formed from each second signal section of the first signal (A) which is emitted in the form of two signal sections interleaved twice with a signal section of the first signal (A).

**Revendications**

1. Procédé pour déterminer la distance (R) et la vitesse relative (v) d'au moins un objet éloigné d'un point d'observation, comprenant les étapes suivantes :

- on émet en continu au moins un premier et un second signal électromagnétique d'une période de signal respective ($T_{Chirp}$) à partir du point d'observation ;
- les signaux sont constitués par des parties de signal (salves) à fréquence constante et d'une durée égale prédéfinie, et les parties d'un signal parcourent une zone de modulation prédéfinie avec des pas de fréquence,

- les signaux sont émis de façon imbriquée du fait que les parties des différents signaux se suivent temporellement les unes les autres, et il existe un saut de fréquence entre les parties de signal qui se suivent temporellement les unes les autres de signaux différents,

- on reçoit les signaux réfléchis par l'objet à titre de signal écho, et on met en oeuvre une opération de mélange avec le signal émetteur pour transformer le signal reçu dans la bande de base dans un canal analogique commun ;

- on met en oeuvre une transformation analogique - numérique et on échantillonne les parties reçues des signaux échos et on prélève au moins une valeur d'échantillonnage pour chaque partie de signal ;

- on évalue séparément les valeurs d'échantillonnage pour les différents signaux échos des différents signaux émis au moyen d'un étage de transformation de Fourier et on détermine les pics correspondant à la fréquence des parties de signal et on détermine un déphasage entre les signaux échos des signaux émis, les parties du second signal (B) étant émises à la même fréquence que les parties correspondantes du premier signal (A), et à partir de la détermination du déphasage entre les parties des signaux (A, B) émises à la même fréquence d'émission, on détermine une vitesse relative univoque,

**caractérisé en ce que** l'on définit tout d'abord la vitesse relative de manière indépendante de la distance de l'objet et on l'inclut dans la mesure de fréquence en fait ambigüe, de telle sorte qu'à partir de la mesure de fréquence il est possible de déterminer de façon univoque la distance par rapport aux vitesses constatées.

2. Procédé selon la revendication 1, **caractérisé en ce que** le premier et le second signal émis sont identiques et sont émis en étant décalés dans le temps l'un par rapport à l'autre.

3. Procédé selon la revendication 1 ou 2, **caractérisé en ce que** le décalage dans le temps correspond à la longueur de trois parties de signal (3T).

4. Procédé selon la revendication 1 ou 2, **caractérisé en ce que** le décalage dans le temps correspond à la longueur de cinq parties de signal (5T).

5. Procédé selon l'une des revendications 1 à 4, **caractérisé en ce que** le second signal (B) est formé par chaque seconde partie du premier signal (A) qui est émise sous la forme de deux parties imbriquées deux fois avec une partie du premier signal (A).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1325350 B1

- EP 1635188 A1